# EUROPÄISCHE PATENTSCHRIFT

(11) **EP 1 312 493 B1**
(45) Veröffentlichungstag und Bekanntmachung des Hinweises auf die Patenterteilung: **12.08.2009**
(21) Anmeldenummer: 02024420.8
(22) Anmeldetag: 28.10.2002
(51) Int. Cl.: F24F 13/04, B60H 1/00

(54) **Luftmischeinrichtung für eine Heizungs- oder Klimaanlage**
Air-mixing device for a heating or air-conditioning system
Dispositif de mélange d'air pour une installation de chauffage ou climatisation

(30) Priorität: 20.11.2001 DE 10156883
(43) Veröffentlichungstag der Anmeldung: 21.05.2003
(73) Patentinhaber: Behr GmbH & Co. KG, 70469 Stuttgart (DE)
(72) Erfinder: Klingler, Dietrich, Dipl.-Ing., 73540 Heubach (DE); Schwahn, Werner, 71701 Schwieberdingen (DE)
(74) Vertreter: Grauel, Andreas

(56) Entgegenhaltungen:
- WO-A-01/62530
- DE-A1- 19 826 990
- DE-A1- 19 908 998
- GB-A- 612 012

## Beschreibung

Die Erfindung bezieht sich auf mit einer Luftmischeinrichtung eine Heizungsoder Klimaanlage eines Kraftfahrzeuges nach dem Oberbegriff des Patentanspruches 1. Eine solche Luftmischeinrichtung wurde durch die DE-A 198 26 990 der Anmelderin bekannt. Ferner offenbart die WO 01/62530 A1 eine Heizungs oder Klimananlage mit eine derartigen Luftmischeinrichtung.

Die aus der DE-A-198 26 990 bekannte Luftmischeinrichtung ist stromabwärts von einem Verdampfer und einem Heizkörper in einer Klimaanlage angeordnet und weist einen Kaltlufteinlaß für den vom Verdampfer kommenden Luftstrom und einen Warmlufteinlaß für den vom Heizkörper kommenden Luftstrom auf. Die Luftmischeinrichtung ist durch eine Vielzahl von parallel zueinander angeordneten Kanalplatten gekennzeichnet, welche den Luftstrom in einzelne Strömungsschichten zerteilen und ausrichten. Dadurch soll eine bessere Durchmischung der Kaltluft und der Warmluft erreicht werden. Zusätzlich sind bei der bekannten Luftmischeinrichtung eingangsseitig Jalousieklappen angeordnet, mit denen der Kaltluft- und der Warmluftstrom gesteuert werden können. Diese bekannte Luftmischeinrichtung benötigt relativ viel Bauraum der Klimaanlage.

Es ist Aufgabe der vorliegenden Erfindung, eine Luftmischeinrichtung der eingangs genannten Art dahingehend zu verbessern, daß mit einfachen Mitteln eine wirksame Durchmischung der Kaltluft- und Warmluftströme bei einer kompakten Bauweise erreicht wird.

Die Lösung dieser Aufgabe ergibt sich aus den Merkmalen des Patentanspruches 1. Damit wird erreicht, daß der Kaltluftstrom und der Warmluftstrom in der Luftmischeinrichtung stärker aufgefächert werden, indem die Abströmrichtungen der durch die Luftkanäle erzeugten Strömungsschichten ständig wechseln. Die einzelnen Luftströmungsschichten greifen somit kammartig ineinander, wodurch eine effektive Verwirbelung und damit eine gute Durchmischung von Kaltluft- und Warmluftstrom erreicht wird. Dies führt dann stromabwärts der Luftmischeinrichtung zu einer gleichmäßigen Temperaturverteilung über den Querschnitt des Luftstromes.

Gemäß einer vorteilhaften Weiterbildung der Erfindung erzeugen die Leitschaufeln aufgrund ihrer Anstellung zu dem Luftstrom Abströmrichtungen, die etwa einen spitzen Winkel miteinander bilden. Dadurch wird einerseits eine gute Durchmischung von Kalt- und Warmluftstrom erreicht und andererseits ein zu hoher Druckverlust vermieden.

Nach einer weiteren vorteilhaften Ausgestaltung der Erfindung sind die Anstellwinkel und/oder die Längen der Leitschaufeln jeweils an den Heizkörper der Klimaanlage, d. h. dessen Temperaturprofil, angepaßt. In sofern können Unsymmetrien in der Temperaturverteilung eines Heizkörpers durch entsprechende Gestaltung der Luftmischeinrichtung, d. h. unterschiedliche Anstellung, Länge oder Krümmung der Leitschaufeln im Warm- und/oder Kaltluftbereich kompensiert werden.

Gemäß einer weiteren vorteilhaften Ausgestaltung kann eine Beeinflussung der Temperaturverteilung auch durch eine Variation des Abstandes der Kanalplatten erreicht werden. Im Falle größerer Abstände ist der Durchmischungseffekt weniger stark und der Druckverlust der Strömung geringer.

In weiterer Ausgestaltung der Erfindung sind die Eintrittskanten der Kanalplatten im Einlaßbereich konkav bzw. kreisbogenförmig ausgebildet. Dies hat den Vorteil, daß unmittelbar vor den Einlässen schwenkbare Luftklappen zur Steuerung des Luftstromes angeordnet werden können, was zu einer kompakten Bauweise führt.

In vorteilhafter Weiterbildung der Erfindung ist die Luftmischeinrichtung als ein Modul ausgebildet, welches als Spritzteil in Kunststoff hergestellt ist. Es kann somit einfach an die Geometrie des Luftkanals der Klimaanlage angepaßt und in diese eingesetzt werden, d. h. auch als Nachrüstteil

Ein Ausführungsbeispiel der Erfindung ist in der Zeichnung dargestellt und wird im folgenden näher beschrieben. Es zeigen:
- **Fig. 1**: eine Klimanalage mit Luftmischeinrichtung,
- **Fig. 2**: die Luftmischeinrichtung mit einer Leitschaufel im Warmluftbereich,
- **Fig. 3**: die Luftmischeinrichtung mit einer Leitschaufel im Kaltluftbereich,
- **Fig. 4**: einen Teil der Luftmischeinrichtung in perspektivischer Darstellung,
- **Fig. 5**: die gesamte Luftmischeinrichtung in perspektivischer Darstellung,
- **Fig. 6**: die Luftmischeinrichtung in anderer perspektivischer Darstellung mit Schwenkklappen im Eintrittsbereich und
- **Fig. 7**: die Luftmischeinrichtung in perspektivischer Darstellung mit variablen Leitschaufeln und variablem Kanalplattenabstand.

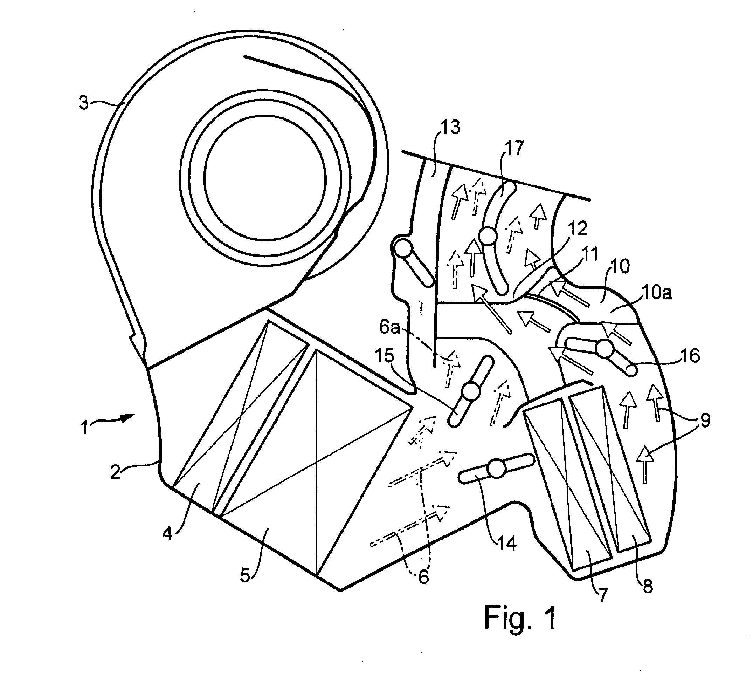

**Fig. 1** zeigt in schematischer Darstellung eine Klimaanlage 1 für ein Kraftfahrzeug. An ein Gehäuse 2der Klimaanlage 1 ist ein Radialgebläse 3 angeflanscht, welches aus der Atmosphäre angesaugte Luft in das Innere der Klimaanlage fördert. Diese Luft trifft zunächst auf ein Filter 4 und dann auf einen Verdampfer 5, wo die Luft abgekühlt und gleichzeitig entfeuchtet wird. Von dort gelangt die Luft, dargestellt durch die Kaltluftpfeile 6, in die beiden Heizkörper 7 und 8, wo die Luft erwärmt (wiedererwärmt) wird. Der hinter dem Heizkörper austretende Warmluftstrom, dargestellt durch die Pfeile 9, gelangt dann in eine Luftmischeinrichtung 10, welche im Bereich der Warmluftströmung eine Leitschaufel 11 aufweist. Die Luftmischeinrichtung, die später genauer beschrieben wird, erstreckt sich über die gesamte Breite eines Luftströmungskanales 12. Parallel zu diesem ist ein Kaltluftbypaß 13 angeordnet. Zur Steuerung, insbesondere der Beeinflussung der Luftströmungsrichtung, sind vor und hinter der Luftmischeinrichtung 10 Schwenkklappen 14, 15, 16 und 17 angeordnet. Ein Teil des Kaltluftstromes, dargestellt durch die Pfeile 6, geht als Teilstrom, dargestellt durch die Pfeile 6a, direkt in die Luftmischeinrichtung 10, wo er auf den Warmluftstrom 9 trifft und sich mit diesem vermischt.

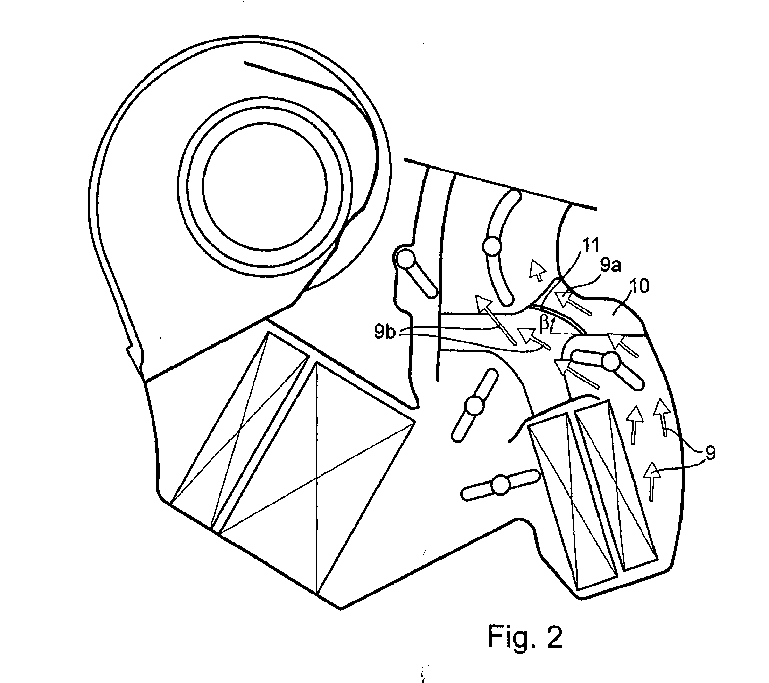

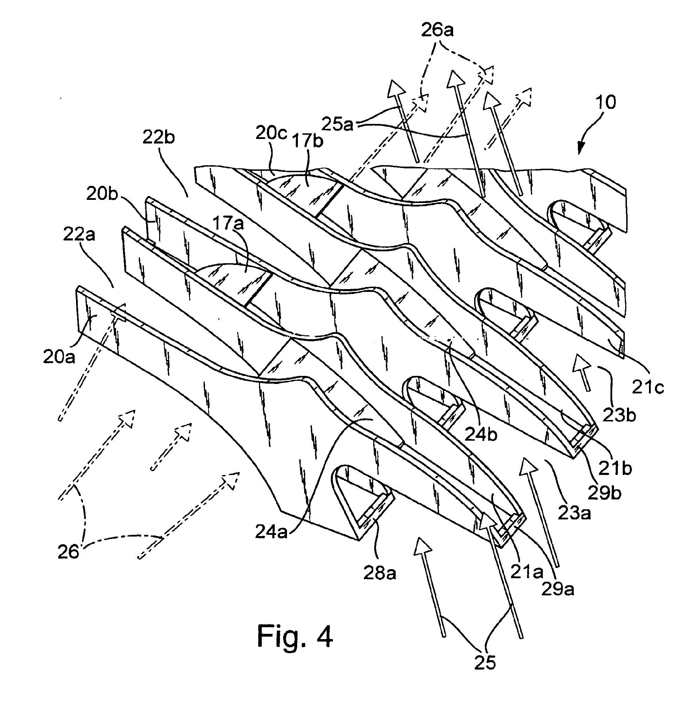

**In** **Fig. 2** ist nur der Warmluftstrom 9 und seine Strömung durch die Luftmischeinrichtung 10 dargestellt. Letztere besteht, wie insbesondere im Zusammenhang mit Fig. 4 erläutert wird, aus mehreren, im wesentlichen parallel zueinander und zur Zeichenebene angeordneten Kanalplatten. Die Zeichenebene verläuft durch einen solchen Kanal und zeigt eine Leitschaufel 11 mit einem Anstellwinkel β im Bereich der Warmluftströmung 9 bzw. 9a. Diese Leitschaufel 11 bewirkt eine Richtungsänderung der Warmluftströmung 9, insbesondere eine Richtungsänderung entsprechend den Pfeilen 9b in Richtung auf die Kaltluftseite.

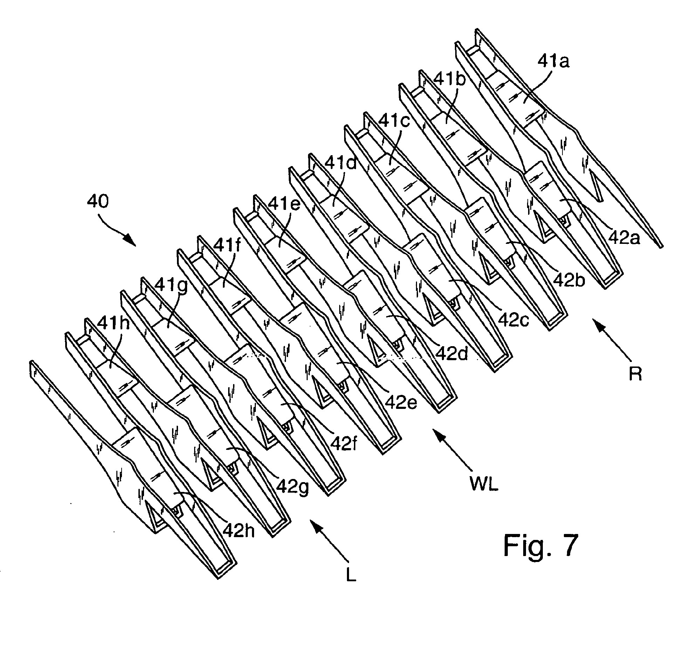

Der Anstellwinkel β kann für alle Leitschaufeln quer zur Luftströmungsrichtung konstant oder auch variabel sein, was bei der Beschreibung von Fig. 7 erläutert wird.

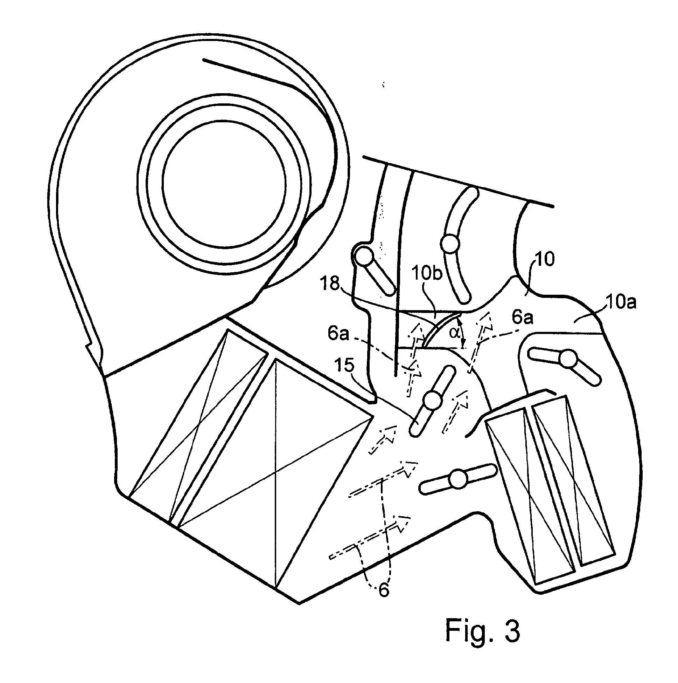

**Fig. 3** zeigt eine Darstellung der Kaltluftströmung, dargestellt durch die Pfeile 6. Die Luftmischeinrichtung 10 ist hier mit einem Kanal dargestellt, der benachbart zu dem in Fig. 2 dargestellten Strömungskanal ist. Die Kaltluftströmung 6 gelangt, gesteuert über die Klappe 15, in den linken Bereich 10b der Luftmischeinrichtung 10, dargestellt durch die Pfeile 6a. In diesem Bereich 10b ist zur Umlenkung der Kaltluft 6a eine Leitschaufel 18 mit einem Anstellwinkel α angeordnet, die eine Beeinflussung der Kaltluftströmung in Richtung der Pfeile 6a bewirkt, d. h. insbesondere in Richtung auf den Warmluftbereich 10a, der in der Zeichnung rechts angeordnet ist. Auch der Anstellwinkel α kann konstant oder unterschiedlich sein, was ausführlich bei der Beschreibung der Fig. 7 erläutert wird.

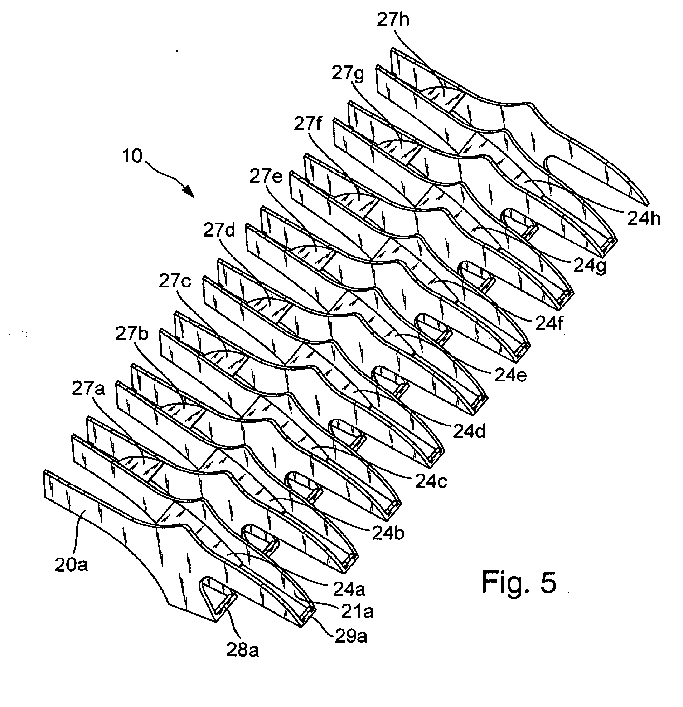

**Fig. 4** zeigt eine perspektivische Darstellung der Luftmischeinrichtung 10, wie sie oben, eingebaut in die Klimaanlage, beschrieben wurde. Man erkennt hier deutlich, daß die Luftmischeinrichtung 10 aus einer Vielzahl von im wesentlichen parallel zueinander angeordneten Plattenelementen 20a, 20 b, 20 c und 21a, 21b, 21c zusammengesetzt ist, die jeweils zwischen sich Luftströmungskanäle 22a, 23a, 22b, 23b usw. bilden. In dem ersten Kanal 22a ist eine Leitschaufel 24 a angeordnet, d. h. im Bereich der Warmluftströmung, die hier durch die Pfeile 25 dargestellt ist. Diese Leitschaufel 24a entspricht in Fig. 2 der Leitschaufel 11, d. h. sie lenkt die Warmluft in Richtung auf den Kaltluftstrom ab. Im benachbarten Kanal 23a ist im Bereich der Kaltluftströmung, hier dargestellt durch die Pfeile 26, eine Leitschaufel 27a angeordnet, die in Fig. 3 der Leitschaufel 18 entspricht. Im benachbarten Kanal 22b ist dann wieder eine Leitschaufel 24b im Bereich der Warmluft und in dem nächsten Kanal 23b eine Leitschaufel 27b im Kaltluftbereich angeordnet. Diese Verteilung von Leitschaufeln 24a, 24b usw. im Bereich der Warmluft, abwechselnd mit Leitschaufeln 27a, 27b usw. im Bereich der Kaltluft erstreckt sich über die gesamte Tiefe der Luftleiteinrichtung 10, was insbesondere aus Fig. 5 hervorgeht. Der Effekt der Leitschaufeln 24a und 27a ist durch die Pfeile 25a und 26a auf der Auslaßseite der Mischvorrichtung 10 dargestellt. Daraus wird erkennbar, daß Warmluft und Kaltluft abwechselnd in Richtung aufeinander abgelenkt werden. Die Luftströmungsschichten, die aus den Kanälen 22a, 23a, 22b, 23b usw. austreten, weisen unterschiedliche Strömungsrichtungen an ihren "Schnittstellen" auf, so daß es in diesem Bereich zu starken Verwirbelungen und damit Durchmischungen kommt.

**Fig. 5** zeigt die gesamte Luftmischeinrichtung 10 in perspektivischer Darstellung, und zwar als Modul oder Baueinheit, wie sie in eine Klimaanlage eingesetzt werden kann. Auf der linken Seite in der Zeichnung, also im Kaltluftbereich, sind in jedem zweiten Kanal die Leitschaufeln 27a, b, c, d, e, f, g, h, und im rechten Bereich in der Zeichnung, also im Warmluftbereich, sind versetzt ebenfalls in jedem zweiten Kanal die Leitschaufeln 24a, b, c, d, e, f, g, h angeordnet. Die einzelnen Plattenelemente 20a, b, c und 21a, b, c sind jeweils durch Stege 28 a, b, c und 29 a, b, c miteinander verbunden, so daß sich ein zusammenhängendes Gebilde ergibt, welches als Kunststoffspritzteil einfach herstellbar ist.

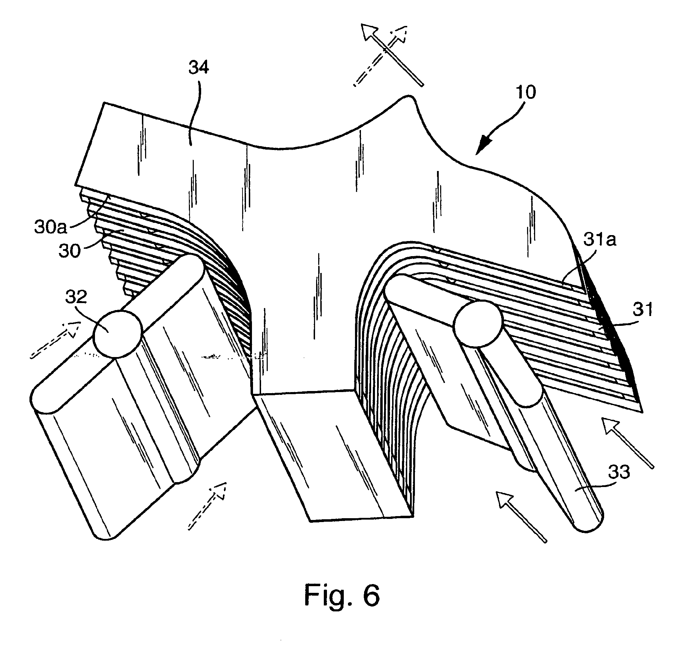

**Fig. 6** zeigt eine erweiterte Darstellung der Luftmischeinrichtung 10 in einer perspektivischen Ansicht auf die Einlaßbereiche 30 und 31, denen Schwenkklappen 32 auf der Kaltluftseite und 33 auf der Warmluftseite vorgelagert sind. Die Eintrittskanten 30a und 31a der Kanalplatten sind konkav oder kreisbogenförmig ausgebildet und damit dem Schwenkradius der vorgelagerten Klappen 32 und 33 angepaßt. Durch diese Schwenkklappen 32 und 33 ist eine weitere Möglichkeit zur Beeinflussung des Kaltluft- und des Warmluftstromes im Hinblick auf die Temperatursteuerung des austretenden Mischluftstromes gegeben.

**Fig. 7** zeigt eine abgewandelte Ausführungsform der Luftmischeinrichtung 40 in perspektivischer Darstellung (analog zum Ausführungsbeispiel gem. Fig. 5). Diese Luftmischeinrichtung 40 weist auf der in der Zeichnung oberen Seite, d. h. auf der Kaltluftseite, Leitschaufeln 41a bis 41h auf, die sich zum Teil hinsichtlich ihrer Größe und ihres Anstellwinkels zum Luftstrom unterscheiden. So sind die Leitschaufeln 41a bis 41d länger ausgebildet als die Leitschaufeln 41e bis 41h. Auf der in der Zeichnung unteren Seite, d. h. auf der Warmluftseite, sind ebenfalls Leitschaufeln angeordnet, und zwar sind dies die Leitschaufeln 42a bis 42h, die jeweils gegenüber den Leitschaufeln 41a bis 41h versetzt angeordnet sind. Die Leitschaufeln 42a bis 42d sind hinsichtlich ihrer Längserstreckung in Luftströmungsrichtung kürzer ausgebildet als die Leitschaufeln 42e bis 42h. Durch diese unterschiedliche Anordnung der Leitschaufeln 42a bis 42h auf der Warmluftseite und der Leitschaufeln 41a bis 41h auf der Kaltluftseite ergibt sich - über die Breite des Luftstromes gesehen - eine unterschiedliche Durchmischung. Dieser Effekt wird dazu benutzt, um eine unsymmetrische Temperaturverteilung des vorgeschalteten Heizkörpers zu kompensieren. Dies wird an Hand des folgenden Beispieles erläutert: In der Zeichnung zeigt ein Pfeil WL die Richtung der Warmluft an, die vom hier nicht dargestellten Heizkörper der Warmluftseite der Luftmischeinrichtung 40 zuströmt. Dieser Warmluftstrom WL besteht aus einem linken Teilstrom, der durch den Pfeil L gekennzeichnet ist und einen rechten Teilstrom, der durch den Pfeil R gekennzeichnet ist. Es sei nun angenommen, daß - infolge unsymmetrischer Temperaturverteilung am Heizkörperder rechte Teilstrom R kälter sei als der linke Teilstrom L, d. h. es besteht ein Temperaturgefälle zwischen Teilstrom R und L. Dieses Temperaturgefälle, was für die aus der Klimaanlage austretende Luft nicht erwünscht ist, wird durch die Luftmischeinrichtung 40 egalisiert, indem die Leitschaufeln 42a bis 42d verkürzt werden, dies führt zu einer Verstärkung des Warmluftstromes. Andererseits werden auf der gegenüberliegenden Seite des Teilstromes R die Leitschaufeln 41a bis 41d verlängert, was zu einer Drosselung des Kaltluftstromes führt. Die Konfiguration der Leitschaufeln auf der Seite des Teilstromes L ist genau umgekehrt, d. h. hier sind die Leitschaufeln 42e bis 42h länger, während die Leitschaufeln auf der Kaltluftseite 41 e bis 41h kürzer sind. Durch diese Maßnahme wird erreicht, daß der etwas kältere Teilstrom R verstärkt wird gegenüber dem mit ihm zu mischenden Kaltluftstrom, so daß sich hinter der Luftmischeinrichtung eine symmetrische bzw. konstante Temperaturverteilung ergibt und sich der Luftmengenstrom in den Teilbereichen nicht ändert.

Schließlich ist bei der Luftmischeinrichtung 40 vorgesehen, daß die Abstände X und Y zwischen den Kanalplatten variabel sind, d. h. im dargestellten Ausführungsbeispiel ist der Abstand Y größer als der Abstand, X was zu einer Verstärkung bzw. Drosselung des Luftstromes führt.

### Bezugszeichenliste

- 1: Klimaanlage
- 2: Gehäuse
- 3: Radialgebläse
- 4: Filter
- 5: Verdampfer
- 6: Kaltluftstrom
- 6a: Kaltluftstrom, Teilstrom
- 7: Heizkörper
- 8: Heizkörper
- 9: Warmluftstrom
- 9a: Warmluftstrom
- 10: Luftmischeinrichtung
- 10a: rechter Bereich der Luftmischeinrichtung
- 10b: linker Bereich der Luftmischeinrichtung
- 11: Leitschaufel
- 12: Luftströmungskanal
- 13: Kaltluftbypaß
- 14: Schwenkklappe
- 15: Schwenkklappe
- 16: Schwenkklappe
- 17: Schwenkklappe
- 18: Leitschaufel
- 19: Leitschaufel
- 20a: Plattenelement
- 20b: Plattenelement
- 20c: Plattenelement
- 21 a: Plattenelement
- 21 b: Plattenelement
- 21 c: Plattenelement
- 22a: Luftströmungskanal
- 22b: Luftströmungskanal
- 23a: Luftströmungskanal
- 23b: Luftströmungskanal
- 24a: Leitschaufel
- 24b: Leitschaufel
- 25: Warmluftströmung
- 25a: Austrittsströmung
- 26: Kaltluftströmung
- 26a: Austrittsströmung
- 27a: Leitschaufel
- 27b: Leitschaufel
- 28a: Steg
- 28b: Steg
- 28c: Steg
- 29a: Steg
- 29b: Steg
- 29c: Steg
- 30: Einlaßbereich
- 30a: Eintrittskante
- 31: Einlaßbereich
- 31a: Eintrittskante
- 32: Schwenkklappe
- 33: Schwenkklappe
- 34: Auslaßbereich
- 40: Luftmischeinrichtung
- 41a: Leitschaufel
- 41b: Leitschaufel
- 41c: Leitschaufel
- 41d: Leitschaufel
- 41e: Leitschaufel
- 41f: Leitschaufel
- 41g: Leitschaufel
- 41h: Leitschaufel
- 42a: Leitschaufel
- 42b: Leitschaufel
- 42c: Leitschaufel
- 42d: Leitschaufel
- 42e: Leitschaufel
- 42f: Leitschaufel
- 42g: Leitschaufel
- 42h: Leitschaufel

## Patentansprüche

1. Heizungs- oder Klimaanlage mit einem Verdampfer (5) zur Erzeugung eines Kaltluftstroms (6), einem Heizkörper (7) zur Erzeugung eines Warmluftstroms und einer Luftmischeinrichtung (10), die stromabwärts von dem Verdampfer (5) und dem Heizkörper (7) in einem Luftführungskanal (12) angeordnet ist, wobei die Luftmischeinrichtung (10) einen Warmlufteinlass (31) für den Warmluftstrom (8), einen Kaltlufteinlass (30) für den Kaltluftstrom (6) und einen Auslass (34) für einen Mischslufftrom sowie mehrere im wesentlichen parallel zueinander in Richtung der Luftströmung angeordnete Kanalplatten (20a, b, ...; 21a, b, ...) zur Bildung von parallelen, jeweils von dem Warm- und Kaltluftstrom beaufschlagbaren Luftkanälen (22a, ..., 23a, ...) aufweist, die quer zur Luftströmungsrichtung abwechselnd mit unterschiedlich angeordneten Leitschaufeln (24a, ..., 42a, ..., 27a, ..., 41a, ...) versehen sind, **dadurch gekennzeichnet, dass** in den Luftkanälen (22a, ..., 23a, ...) abwechselnd jeweils in deren dem Warmlufteinlass (31) und deren dem Kaltlufteinlass (30) zugewandten Bereich eine Leitschaufel (24a, ..., 42a, ..., 27a, ..., 41a, ...) derart angeordnet ist, dass im Betrieb Warmluft und Kaltluft abwechselnd in Richtung aufeinander abgelenkt und vermischt werden.

2. Heizungs- oder Klimaanlage nach Anspruch 1, **dadurch gekennzeichnet, dass** die Leitschaufeln (24a, 27a) für den Kaltluftstrom und für den Warmluftstrom Abströmrichtungen (25a, 26a) erzeugen, die miteinander einen spitzen Winkel bilden.

3. Heizungs- oder Klimaanlage nach Anspruch 1 oder 2, **dadurch gekennzeichnet, dass** der Anstellwinkel (α, β) der Leitschaufeln (24a,...,27a,...) jeweils innerhalb des Kaltluftstromes und des Warmluftstromes gleich ist.

4. Heizungs- oder Klimaanlage nach Anspruch 1 oder 2, **dadurch gekennzeichnet, dass** die Anstellwinkel (α, β) und/oder die Geometrie der einzelnen Leitschaufeln (41a bis 41h) in den Kanälen auf der Kaltluftseite und/oder auf der Warmluftseite derart unterschiedlich gewählt ist, dass dadurch eine unsymmetrische Temperaturverteilung des Heizkörpers kompensierbar ist.

5. Heizungs- oder Klimaanlage nach einem der vorhergehenden Ansprüche, **dadurch gekennzeichnet, dass** zwischen den einzelnen Kanalplatten der Luftmischeinrichtung (40) unterschiedliche Abstände vorgesehen sind.

6. Heizungs- oder Klimaanlage nach einem der vorhergehenden Ansprüche, **dadurch gekennzeichnet, dass** die Eintrittskanten (30a, 31a) der Kanalplatten (20a,.... 21a,...) für den Warmluft- und den Kaltlufteinlaß (30, 31) konkav ausgebildet sind.

7. Heizungs- oder Klimaanlage nach einem der vorhergehenden Ansprüche, **dadurch gekennzeichnet, dass** im Bereich des Warmlufteinlasses (31) und des Kaltlufteinlasses (30) Schwenkklappen (33, 32) angeordnet sind.

8. Heizungs- oder Klimaanlage nach einem der vorhergehenden Ansprüche, **dadurch gekennzeichnet, dass** die Luftmischeinrichtung (10) als Modul ausgebildet ist, welches in einen Luftführungskanal (12) eingesetzt ist.

9. Heizungs- oder Klimaanlage nach Anspruch 8, **dadurch gekennzeichnet, dass** die modulartig ausgebildete Luftmischeinrichtung(10), als Kunststoffspritzteil hergestellt ist.

## Claims

1. Heating or air conditioning system with an evaporator (5) for producing a cold air flow (6), a heater (7) for producing a warm air flow and an air blending device (10) installed downstream of the evaporator (5) and the heater (7) in an air guidance duct (12), wherein the air blending device (10) comprises a warm air inlet (31) for the warm air flow (8), a cold air inlet (30) for the cold air flow (6) and an outlet (34) for a blended air flow as well as a plurality of duct plates (20a, b ...; 21a, b ...) arranged substantially parallel to one another in the air flow direction to form parallel air passages (22a, ..., 23a, ...) to which the warm and cold air flow can be applied and which are alternately provided with guide blades (24a, ..., 42a, ..., 27a, ..., 41a, ...) arranged in different ways at right angles to the air flow direction , **characterised in that** in each air passage (22a, .., 23a, ...) a guide blade (24a, ..., 42a, ..., 27a, ..., 41a, ...) is alternately provided in the region adjacent to the warm air inlet (31) and in the region adjacent to the cold air inlet (30), so that warm air and cold air are alternately diverted towards one another and blended in operation.

2. Heating or air conditioning system according to claim 1, **characterised in that** the guide blades (24a, 27a) produce discharge directions (25a, 26a) enclosing an acute angle for the cold air flow and the warm air flow.

3. Heating or air conditioning system according to claim 1 or 2, **characterised in that** the angle of incidence (α, β) of the guide blades (24a, ..., 27a, ...) is identical within the cold air flow and the warm air flow.

4. Heating or air conditioning system according to claim 1 or 2, **characterised in that** the angle of incidence (α, β) and/or the geometry of the individual guide blades (41a to 41b) is/are chosen to be different in the passages on the cold air side and/or the warm air side, so that any asymmetrical temperature distribution of the heater can be compensated.

5. Heating or air conditioning system according to any of the preceding claims, **characterised in that** different distances are provided between the individual duct plates of the air blending device (40).

6. Heating or air conditioning system according to any of the preceding claims, **characterised in that** the inlet edges (30a, 31a) of the duct plates (20a, ..., 21a, ...) for the warm air and cold air inlets are concave.

7. Heating or air conditioning system according to any of the preceding claims, **characterised in that** swivel dampers (33, 32) are provided in the region of the warm air inlet (31) and the cold air inlet (30).

8. Heating or air conditioning system according to any of the preceding claims, **characterised in that** the air blending device (10) is designed as a module installed into an air guidance duct (12).

9. Heating or air conditioning system according to claim 8, **characterised in that** the modular air blending device (10) is produced as an injection moulded plastic part.

## Revendications

1. Système de chauffage ou de climatisation comprenant un évaporateur (5) servant à la production d'un flux d'air froid (6), un radiateur (7) servant à la production d'un flux d'air chaud, et un dispositif de mélange d'air (10) qui est agencé dans un conduit de guidage d'air (12), en aval de l'évaporateur (5) et du radiateur (7), où le dispositif de mélange d'air (10) présente une entrée d'air chaud (31) pour le flux d'air chaud (8), une entrée d'air froid (30) pour le flux d'air froid (6) et une sortie (34) pour un flux de mélange d'air, ainsi que plusieurs plaques de conduits (20a, b, ... ; 21a, b, ...) disposées sensiblement de façon parallèle, les unes par rapport aux autres, dans la direction de l'écoulement de l'air, et servant à la formation de conduits d'air parallèles (22a, ..., 23a, ...) pouvant être alimentés à chaque fois par le flux d'air chaud et par le flux d'air froid, conduits d'air qui, de façon transversale par rapport à la direction de l'écoulement de l'air, sont dotés, à tour de rôle, d'aubes fixes (24a, ..., 42a, ..., 27a, ..., 41a, ...) disposées de façon variable,
**caractérisé en ce que**, dans les conduits d'air (22a, ..., 23a, ...), une aube fixe (24a, ..., 42a, ..., 27a, ..., 41a, ...) est disposée à chaque fois, à tour de rôle, dans leur zone tournée vers l'entrée d'air chaud (31) et vers l'entrée d'air froid (30), de manière telle, qu'au cours du fonctionnement, de l'air chaud et de l'air froid soient déviés à tour de rôle, en se dirigeant l'un vers l'autre, et mélangés.

2. Système de chauffage ou de climatisation selon la revendication 1, **caractérisé en ce que** les aubes fixes (24a, 27a) produisent, pour le flux d'air froid et pour le flux d'air chaud, des directions d'évacuation (25a, 26a) qui forment entre elles un angle aigu.

3. Dispositif de chauffage ou de climatisation selon la revendication 1 ou 2, **caractérisé en ce que** l'angle d'incidence (α, β) des aubes fixes (24a, ..., 27a, ...) est à chaque fois identique à l'intérieur du flux d'air froid et du flux d'air chaud.

4. Système de chauffage ou de climatisation selon la revendication 1 ou 2, **caractérisé en ce que** les angles d'incidence (α, β) et / ou la géométrie des différentes aubes fixes (41a à 41h), dans les conduits, sur le côté d'air froid et / ou sur le côté d'air chaud, sont choisis de façon différenciée, de manière telle qu'une distribution de températures asymétrique du radiateur puisse ainsi être compensée.

5. Système de chauffage ou de climatisation selon l'une quelconque des revendications précédentes, **caractérisé en ce qu'**il est prévu des espaces variables entre les différentes plaques de conduits du dispositif de mélange d'air (40).

6. Système de chauffage ou de climatisation selon l'une quelconque des revendications précédentes, **caractérisé en ce que** les bords d'entrée (30a, 31a) des plaques de conduits (20a, ..., 21a, ...) sont configurés de façon concave pour l'entrée d'air chaud et d'air froid (30, 31) .

7. Système de chauffage ou de climatisation selon l'une quelconque des revendications précédentes, **caractérisé en ce que** des volets pivotants (33, 32) sont disposés dans la zone de l'entrée d'air chaud (31) et de l'entrée d'air froid (30).

8. Système de chauffage ou de climatisation selon l'une quelconque des revendications précédentes, **caractérisé en ce que** le dispositif de mélange d'air (10) est configuré comme un module qui est introduit dans un conduit de guidage d'air (12).

9. Système de chauffage ou de climatisation selon la revendication 8, **caractérisé en ce que** le dispositif de mélange d'air (10) configuré de façon modulaire est fabriqué comme pièce en matière plastique moulée par injection.
